# EUROPEAN PATENT APPLICATION

(11) **EP 2 336 975 A1**
(43) Date of publication of application: **22.06.2011**
(21) Application number: 10190477.9
(22) Date of filing: 09.11.2010
(51) Int. Cl.: G06T 11/60, H04N 5/232, H04N 5/272

(54) **Apparatus and method for image registration in portable terminal**

(30) Priority: 09.11.2009 KR 20090107372
(71) Applicant: Samsung Electronics Co., Ltd., Suwon-si, Gyeonggi-do (KR)
(72) Inventor: Han, Zhong-Hai, Suwon-si, Gyeonggi-do (KR); Kim, Sung-Cheol, Suwon-si, Gyeonggi-do (KR)
(74) Representative: van Westenbrugge, Andries

(57) **Abstract**

An apparatus and a method for image registration in a portable terminal are provided. The method includes determining a plurality of images, comparing edge regions of the plurality of images to search for the same region in the plurality of images, and matching the plurality of images based on the same region.

## Description

### BACKGROUND OF THE INVENTION

### 1. Field of the Invention:

The present invention relates to an apparatus and method for image registration in a portable terminal. More particularly, the present invention relates to an apparatus and method for matching different images using edge regions of the images in the portable terminal.

### 2. Description of the Related Art:

Recently, with users' increasing preference for a digital camera function, most portable terminals are now providing the digital camera function. The digital camera function of the portable terminals provides various service features including a simple image capture function. For example, the digital camera function provides a function of capturing a background image, a function of giving various effects to a captured image, a function of image registration, and the like.

Generally, image registration refers to a process of geometrically matching physically similar regions within two or more different images.

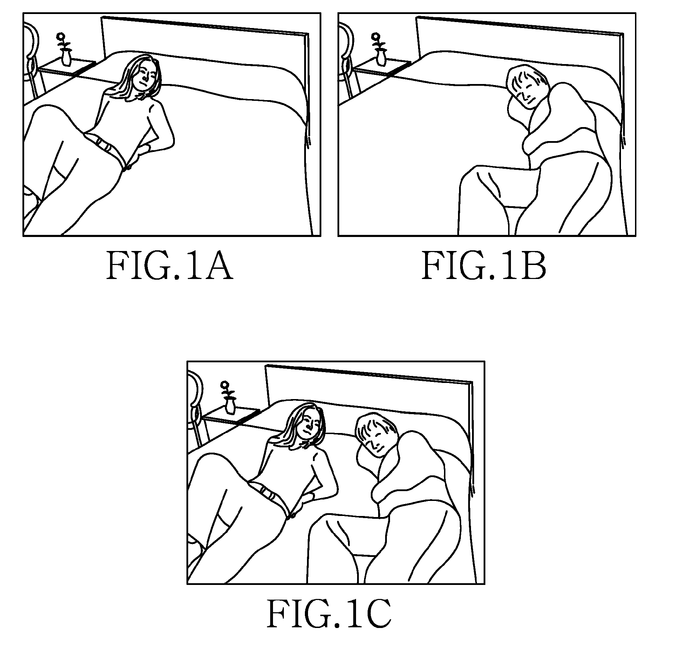

FIGs. 1A - 1C are diagrams illustrating an example of an image registration scheme of a portable terminal according to the related art.

Referring to FIGs. 1A-1C, the image registration function searches for a common region in an image, which includes (a) searching for a specific user in an image, (b) searching for a different user in the image, matching the two images (a) and (b) based on the searched common region, and acquiring one image (c) comprising both the specific user from the first image and the second user from the second image.

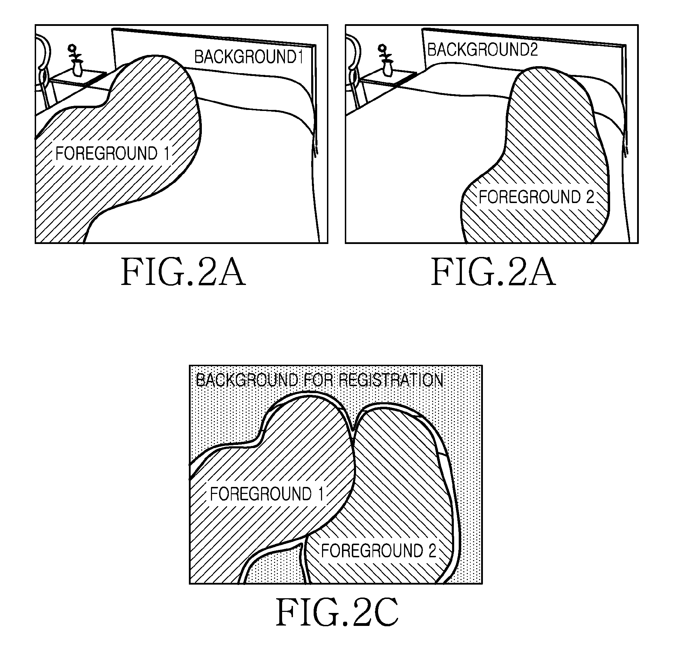

FIGs. 2A - 2C are diagrams illustrating an image registration scheme of a portable terminal according to the related art.

Referring to FIGs. 2A-2C, an image registration unit should distinguish a foreground region 1 or 2, where an object exists, from a background region 1 or 2. That is, the remaining region outside the foreground region 1 or 2 in each of the two images is registered as a background region. A common region in the background regions 1 and 2 of the two images is then searched for, as in FIGs. 2A and 2B, and match the two images based on the common region, as in FIG. 2C. For the sake of the above image registration, it is of importance to search for a foreground region, where an object exists, and a common region of two images in each of the two images.

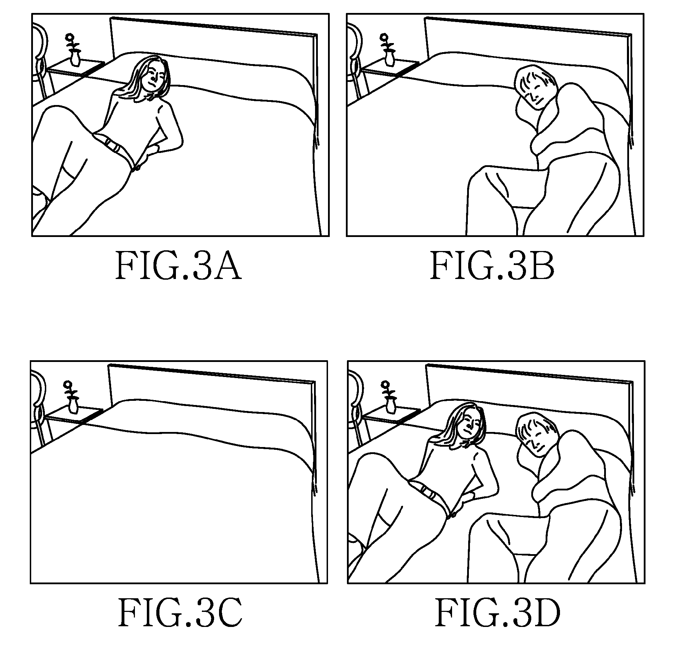

FIGs. 3A - 3D are diagrams illustrating an image registration scheme of a portable terminal according to the related art.

Referring to FIGs. 3A-3D, the related art provides a technique of additionally acquiring an image without an object (c), to acquire an image with objects (d). That is, the related art provides a technique of comparing the image without an object (c), with each of the two images comprising the objects, (a) and (b), and then extracting each of the objects and a common region from images (a) and (b) to acquire a matched image (d) using the extracted objects and the common region.

However, because the technique captures or acquires a separate image including an image with no object, there is a disadvantage where a user needs to perform a complex procedure and also, there is a disadvantage that usability is degraded.

Therefore, a need exists for an improved image capture function for simplifying a process of capturing an object in an image in a portable terminal.

### SUMMARY OF THE INVENTION

An aspect of the present invention is to address at least the above problems and/or disadvantages and to provide at least the advantages below. Accordingly, an aspect of the present invention is to provide an apparatus and method for image registration in a portable terminal.

Another aspect of the present invention is to provide an image registration apparatus and a method for simplifying a user procedure in a portable terminal.

A further aspect of the present invention is to provide an apparatus and method for matching a plurality of images using edge regions of the images in a portable terminal.

Still another aspect of the present invention is to provide an apparatus and method for matching a plurality of images using edge regions of the images not displayed on a preview screen in a portable terminal.

The above aspects are addressed by providing an apparatus and a method for image registration in a portable terminal.

In accordance with an aspect of the present invention, a method for image registration in a portable terminal is provided. The method includes determining a plurality of images, comparing edge regions of the plurality of images to search for a same region in the plurality of images, and matching the plurality of images based on the same region.

In accordance with another aspect of the present invention, an apparatus for image registration in a portable terminal is provided. The apparatus includes a controller and an image registration unit. The controller determines a plurality of images. The image registration unit compares edge regions of the plurality of images to search for a same region in the plurality of images, and matches the plurality of images based on the same region.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawings, in which:

FIGs. 1A - 1C are diagrams illustrating an example of an image registration scheme of a portable terminal according to the related art;

FIGs. 2A - 2C are diagrams illustrating an image registration scheme of a portable terminal according to the related art;

FIGs. 3A - 3D are diagrams illustrating an image registration scheme of a portable terminal according to the related art;

FIG. 4 is a block diagram illustrating a construction of a portable terminal according to an exemplary embodiment of the present invention;

FIG. 5 is a flowchart illustrating an image registration procedure in a portable terminal according to an exemplary embodiment of the present invention;

FIGs. 6A and 6B are diagrams illustrating an edge region used for image registration in a portable terminal according to an exemplary embodiment of the present invention; and

FIGs. 7A - 7C are diagrams illustrating a preview screen in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The following description is made for a method and apparatus for matching a plurality of images using edge regions of the images in a portable terminal according to exemplary embodiments of the present invention. Also, the following description is made for the case of matching two sheets of images, for example, and is applicable to the case of matching a plurality of images in the same scheme. Also, the following description assumes that the two sheets of images have the same background.

FIGs. 1A - 7C, discussed herein, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

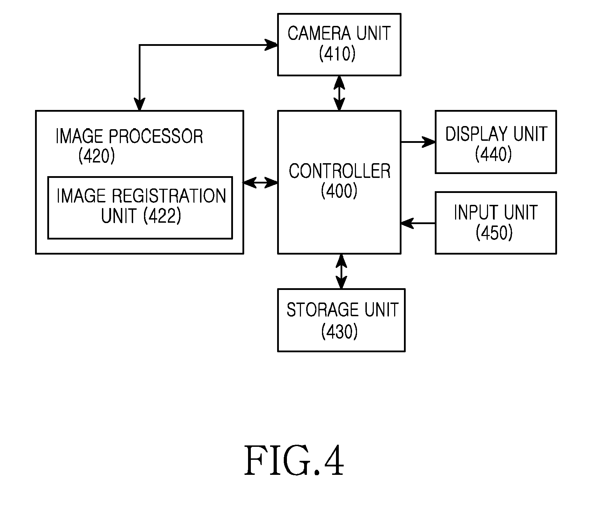

FIG. 4 is a block diagram illustrating a construction of a portable terminal according to an exemplary embodiment of the present invention.

Referring to FIG. 4, the portable terminal includes a controller 400, a camera unit 410, an image processor 420, a storage unit 430, a display unit 440, and an input unit 450. The image processor 420 includes an image registration unit 422.

The controller 400 controls and processes general operations of the portable terminal. More particularly, according to an exemplary embodiment of the present invention, the controller 400 controls and processes a function for matching two sheets of images. In more detail, the controller 400 controls and processes a function for, upon occurrence of an image registration event, displaying an image inputted through the camera unit 410 on the display unit 440, acquiring a first image and a second image according to user's manipulation, and performing image registration using edge regions of the first image and the second image through the image processor 420.

The camera unit 410 includes a camera sensor (not shown) for converting an optical signal into an electrical signal, and a signal processor (also not shown) for converting an analog image signal captured from the camera sensor into digital data. The camera unit 410 outputs the image signal converted into the digital data to the image processor 420 under control of the controller 400. Here, the camera sensor may be a Charge Coupled Device (CCD) sensor, and the signal processor may be realized as a Digital Signal Processor (DSP).

The image processor 420 processes an image signal outputted from the camera unit 410 in a frame unit, and outputs the image signal adapted to the characteristic and size of the display unit 440. Additionally, the image processor 420 includes an image coder/decoder (codec)(not shown). The image codec performs a role of coding an image signal in a set scheme or decoding coded frame image data into the original frame image data. Furthermore, according to an exemplary embodiment of the present invention, the image processor 420 includes the image registration unit 422 and thus, under control of the controller 400, matches a first image and a second image acquired through the camera unit 410 and provides a matched image to the controller 400.

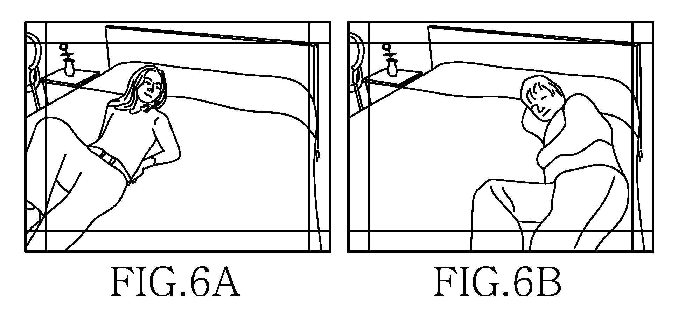

FIGs. 6A and 6B are diagrams illustrating an edge region used for image registration in a portable terminal according to an exemplary embodiment of the present invention.

Referring to FIGs. 6A and 6B, the image registration unit 422 searches the same region through a comparison between edge regions of the first image (a) and the second image (b), extracts a foreground region including an object from each of the first image and the second image based on the searched region, and performs image matching centering on the same region. By doing so, the image registration unit 422 acquires one image including all of the foreground regions extracted from the first image and the second image. For instance, in a case where the image registration unit 422 arranges the first image and the second image based on the same region of the edge, the image registration unit 422 may judge if respective regions of the first image and the second image are the same as each other, judge different regions as foreground regions including objects, and perform image matching including the foreground regions of the first image and the second image based on the same region. Also, the image registration unit 422 may apply various conventional algorithms provided for image registration based on the same region to perform the image registration. A size of the edge region may be previously set, or may be changed according to a user or circumstance. The edge region may be a region inputted through the camera unit 410 but not displayed on a screen of the display unit 440. Also, up/down and left/right edge regions may be all the same or may be different in size. In addition, the image registration unit 422 may use all of four edge regions of the first image and the second image, or may use only edge regions of a predefined number. For example, generally, in a case where a user photographs a specific object, the specific object is included in a down edge region but is not included in up and left/right edge regions. Therefore, he/she may use the remaining up and left/right edge regions without the down edge region.

The storage unit 430 stores a variety of programs and data for general operations of the portable terminal, and stores an image acquired through the camera unit 410 and the image processor 420.

The display unit 440 displays state information generated during operation of the portable terminal, numerals, and characters. More particularly, according to an exemplary embodiment of the present invention, the display unit 440 outputs images inputted from the image processor 420, and displays an image matched under control of the controller 400. Also, upon occurrence of an image registration event, the display unit 440 may display an outline of a first image during a preview for acquiring a second image under control of the controller 400. This is to acquire two sheets of images having the same background. Additionally, upon preview for acquiring a first image and a second image for image registration, the display unit 440 may display an image acquired through the camera unit 410 as it is under control of the controller 400, but may display only the remaining region without an edge region to be used for the image registration in the acquired image.

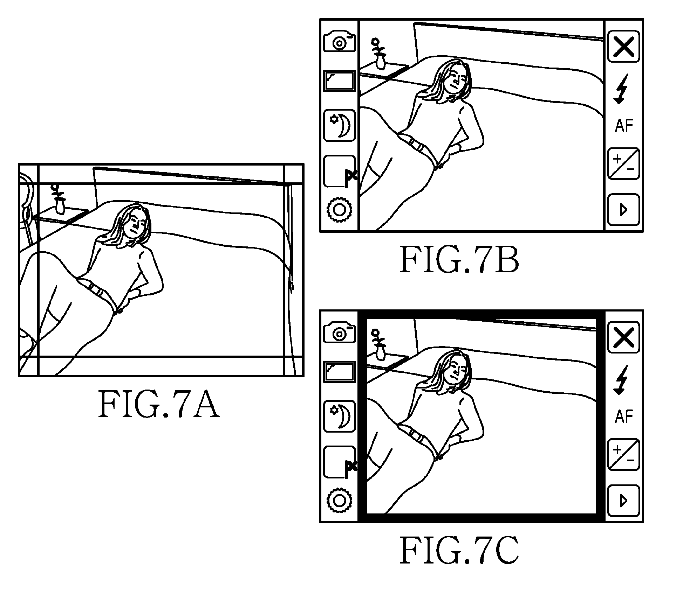

FIGs. 7A - 7C are diagrams illustrating a preview screen in a portable terminal according to an exemplary embodiment of the present invention.

Referring to FIGs. 7A - 7C, in a case where the camera unit 410 acquires an image as in FIG. 7A, the display unit 440 may not display an edge region of the acquired image on a screen as in FIG. 7B or 7C. Furthermore, the display unit 440 may display an edge region on a preview screen for acquiring the first image and the second image. This is to lead a user to exclude a target object from the edge region by displaying the edge region.

The input unit 450 includes a plurality of function keys or touch sensors, and provides the controller 400 with data corresponding to either a key pressed by a user or a touch coordinate. According to an exemplary embodiment of the present invention, the input unit 450 receives a key or touch coordinate for occurrence of an image registration event from the user and provides the received key or touch coordinate to the controller 400.

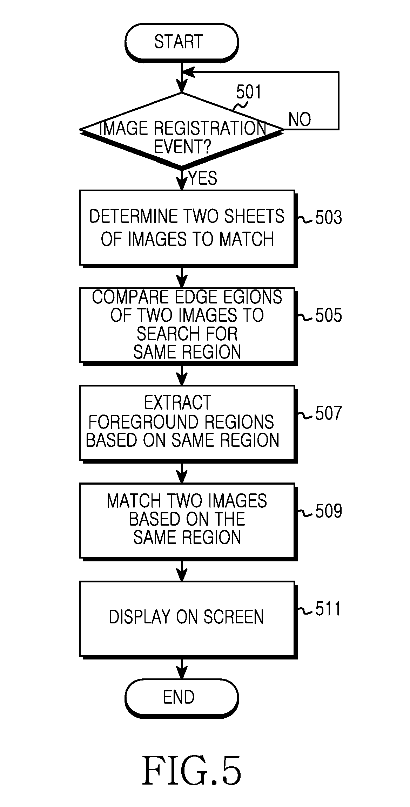

FIG. 5 is a flowchart illustrating an image registration procedure in a portable terminal according to an exemplary embodiment of the present invention.

Referring to FIG. 5, when an image registration event takes place in step 501, the portable terminal proceeds to step 503 and determines a first image and a second image to match. That is, the portable terminal may acquire the first image and the second image through the camera unit 410. At this time, after capturing the first image, the portable terminal may display an outline of the first image on a preview screen at the time of capturing the second image, thereby inducing capturing of the first image and the second image with the same background. In addition, the portable terminal may display an edge region on the preview screen for acquiring the first image and the second image, causing a target object to be excluded from the edge region.

Thereafter, the portable terminal compares edge regions of the first image and the second image with each other to search for the same region in step 505. For example, the portable terminal searches a region having the same pixel value by comparing pixel values of the edge regions of the first image and the second image with each other using a mask of a predefined size. Here, a size of the edge region may be previously set, or may be changed according to a user or circumstances. The edge region may be a region inputted through the camera unit 410 but not displayed on a screen of the display unit 440. Additionally, the portable terminal may use all of four edge regions of the first image and the second image or only edge regions of a predefined number.

After that, in step 507, the portable terminal extracts foreground regions including objects from the first image and the second image based on the same region. For example, in a case where the portable terminal arranges the first image and the second image based on the same region of the edge, the portable terminal may judge if respective regions of the first image and the second image are the same as each other, and judge different regions as foreground regions including objects. Undoubtedly, by applying other conventional algorithms provided for image registration based on the same region, the portable terminal may extract the foreground regions.

Thereafter, the portable terminal matches the first image and the second image based on the searched same region and generates one matched image in step 509. Then, the portable terminal proceeds to step 511 and displays the generated image on a screen. That is, the portable terminal generates and displays a matched image including all of the foreground regions of the first image and the second image based on the same region of the edge.

As described above, exemplary embodiments of the present invention acquire two sheets of images through a camera and perform image registration, but may perform image registration for images stored in the portable terminal.

Compared to the image registration technique of the related art where a separate image including no objects are acquired, exemplary embodiments of the present invention have an effect of being capable of simplifying a procedure and improving a user convenience by matching a plurality of images using edge regions of the images in a portable terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for image registration in a portable terminal, the method comprising:
determining a plurality of images;
comparing edge regions of the plurality of images to search for a same region in the plurality of images; and
matching the plurality of images based on the same region.

2. An apparatus for image registration in a portable terminal, the apparatus comprising:
a controller for determining a plurality of images; and
an image registration unit for comparing edge regions of the plurality of images to search for a same region in the plurality of images, and matching the plurality of images based on the same region.

3. The method of claim 1 and the apparatus of claim 2, respectively, wherein the edge region is at least one of a previously set region and changeable according to circumstances.

4. The method of claim 1 and the apparatus of claim 2, respectively, and, the method is wherein comparing the edge regions of the plurality of images compares all of up or down and left or right edge regions of the plurality of images or compares only part of the up or down and left or right edge regions, and
the apparatus is wherein the image registration unit compares all of up or down and left or right edge regions of the plurality of images or compares only part of the up or down and left or right edge regions.

5. The method of claim 1, and the apparatus of claim 2, respectively, and, wherein the up or down and left or right edge regions of the images are all the same or are different in size.

6. The method of claim 1, wherein the edge region is a region not displayed on a screen among regions of an image acquired from a camera.

7. The method of claim 1, wherein the matching of the plurality of images comprises:
extracting a foreground region including an object from each of the plurality of images based on the same region; and
acquiring a matched image including the extracted foreground region based on the same region.

8. The method of claim 1, wherein the plurality of images are images that are acquired from a camera or previously stored.

9. The method of claim 8, wherein the determining of the plurality of images further comprises: displaying the edge regions on a preview screen when acquiring the plurality of images from the camera.

10. The method of claim 8, wherein the determining of the plurality of images further comprises:
when acquiring the plurality of images from the camera, acquiring a first image;
displaying an outline of the first image on a preview screen for acquiring a second image; and
acquiring the second image using the preview screen on which the outline is displayed.

11. The apparatus of claim 2, wherein the edge region is a region not displayed on a screen among regions of an image acquired from a camera unit.

12. The apparatus of claim 2, wherein the image registration unit extracts a foreground region including an object from each of the plurality of images based on the same region, and acquires a matched image including the extracted foreground region based on the same region.

13. The apparatus of claim 2, further comprising:
a camera unit for photographing an image under control of the controller; and
a storage unit for storing an image under control of the controller,
wherein the controller acquires or determines the plurality of images from the camera unit or the storage unit.

14. The apparatus of claim 13, further comprising a display unit for displaying the edge regions on a preview screen under control of the controller, at the time of acquiring the plurality of images from the camera unit.

15. The apparatus of claim 13, further comprising a display unit for displaying an outline of a first image on a preview screen for acquiring a second image under control of the controller, at the time of acquiring the plurality of images from the camera unit.
